## Europäisches Patentamt
## European Patent Office
## Office européen des brevets

(19)

(11) Veröffentlichungsnummer: **0 010 081**
**B1**

(12) **EUROPÄISCHE PATENTSCHRIFT**

(45) Veröffentlichungstag der Patentschrift: **22.06.83**

(51) Int. Cl.³: **B 23 B 27/16, B 23 C 5/20**

(21) Anmeldenummer: **79890037.9**

(22) Anmeldetag: **26.09.79**

(54) **Stabförmiger Schneideinsatz und Halter für denselben.**

(30) Priorität: **28.09.78 AT 7002/78**

(43) Veröffentlichungstag der Anmeldung:
**16.04.80 Patentblatt 80/8**

(45) Bekanntmachung des Hinweises auf die Patenterteilung:
**22.06.83 Patentblatt 83/25**

(84) Benannte Vertragsstaaten:
**CH FR GB IT**

(56) Entgegenhaltungen:
**DD - A - 38 682**
**DD - A - 125 475**
**DE - A - 1 652 666**
**DE - A - 1 958 574**
**DE - B - 1 477 374**
**DE - U - 1 937 160**

(73) Patentinhaber: **VEREINIGTE EDELSTAHLWERKE AKTIENGESELLSCHAFT (VEW)**
**Elisabethstrasse 12**
**A-1010 Wien (AT)**

(72) Erfinder: **Rode, Hasso**
**Eduard Sprangerstrasse 39**
**D-7400 Tübingen (DE)**

(74) Vertreter: **Widtmann, Georg, Dr.**
**Elisabethstrasse 12**
**A-1010 Wien (AT)**

Courier Press, Leamington Spa, England.

Stabförmiger Schneideinsatz und Halter für denselben.

Die Erfindung betrifft einen stabförmigen Schneideinsatz, z.B. aus Hartmetall oder Schnellstahl, mit einer annähernd rhombischen Querschnittsfläche, deren spitze Winkel vorzugsweise jeweils kleiner als 80° sind, in dessen Endbereichen je zwei ebene Nebenschneidenflächen vorgesehen sind, welche in Richtung der geometrischen Stabachse gesehen, durch die kürzere Diagonale der rhombischen Querschnittfläche voneinander getrennt sind, wobei die gedachte Verbindungsgerade der beiden der kürzeren Diagonale gegenüberliegenden Eckpunkte des jeweiligen Endbereiches normal zur geometrischen Stabachse ist und von diesen Eckpunkten weg die beiden Nebenschneidenflächen in der durch diese Verbindungsgerade und die geometrische Stabachse bestimmten gedachten Ebene um gleich große Freiwinkel gegenüber dieser Verbindungsgeraden nach innen geneigt sind, sowie einen Halter für den Schneideinsatz.

Aus der DD—A 38 682 ist eine mit den genannten Merkmalen ausgebildete stabförmige Wendeschneidplatte bekannt und der Erfindung liegt die Aufgabe zugrunde, einen derartigen Schneideinsatz noch zu verbessern.

Die Lösung dieser Aufgabe in Form einer Verdoppelung der zur Verfügung stehenden Schneidkanten gelingt erfindungsgemäß dadurch, daß die beiden Nebenschneidenflächen in der durch die kürzere Diagonale und die geometrische Stabachse bestimmten gedachten Ebene um gleich große Freiwinkel gegenüber einer zur Stabachse normalen gedachten Ebene entgegengesetzt geneigt sind.

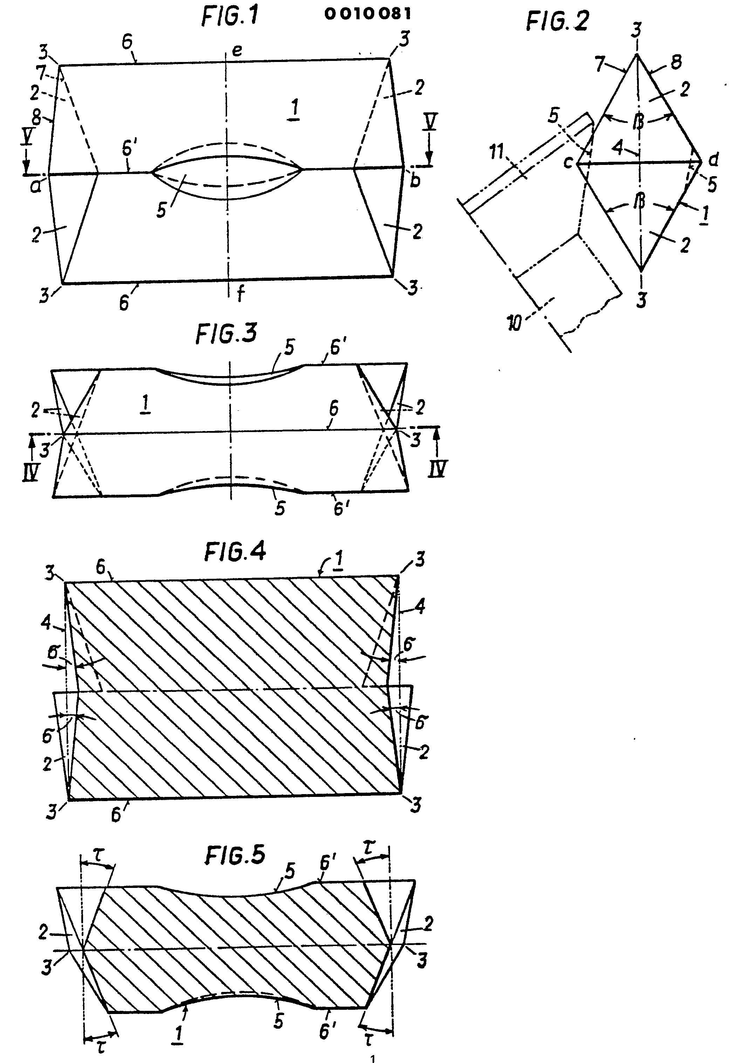

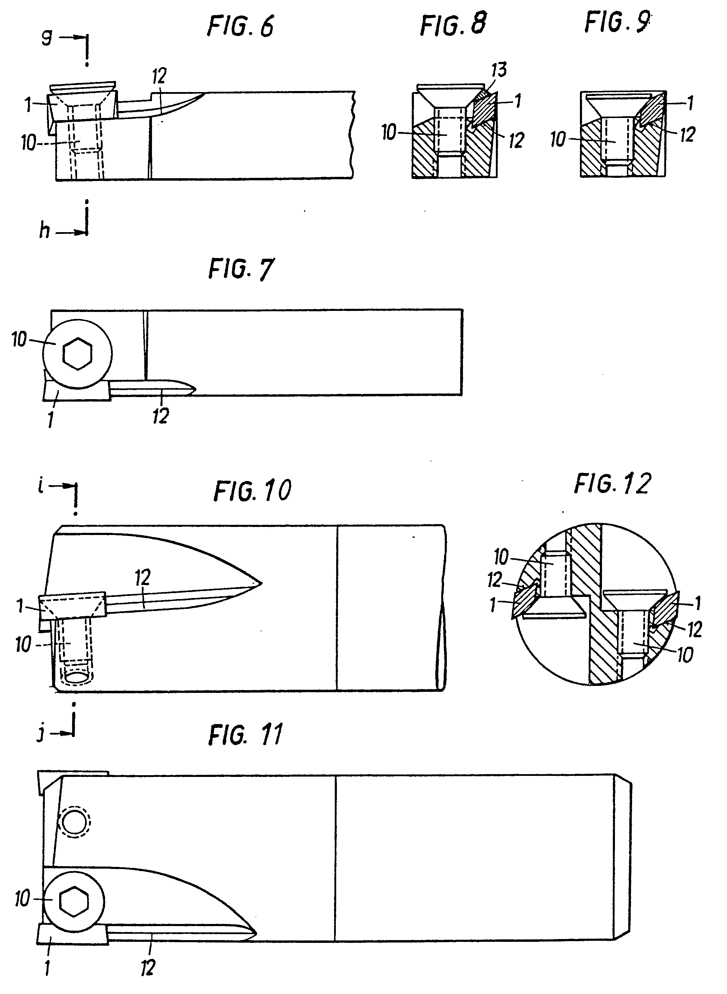

Im folgenden wird die Erfindung in einem Ausführungsbeispiel erläutert, das durch die Zeichnung in schematischer Darstellung veranschaulicht ist, Fig. 1 zeigt einen wendbaren stabförmigen Schneideinsatz 1 in einem vergrößerten Maßstab in Ansicht, Fig. 2 in Seitenansicht von links, Fig. 3 in Draufsicht, Fig. 4 im Längsschnitt, bzw. in Ansicht und Fig. 5 im Längsschnitt und Draufsicht; Fig. 6 beinhaltet ein Drehwerkzeug mit dem in den Fig. 1 bis 5 dargestellten Schneideinsatz 1 in einem kleineren Maßstab in Ansicht, Fig. 7 in Draufsicht, Fig. 8 im Schnitt gemäß der Linie g—h der Fig. 6 in Seitenansicht von links; Fig. 9 zeigt im wesentlichen denselben Schnitt wie Fig. 8, jedoch bei weggelassenem Spanbrecher 13; Fig. 10 beinhaltet ein Fräswerkzeug mit dem in den Fig. 1 bis 5 dargestellten Schneideinsatz 1, ebenfalls in einem kleineren Maßstab in Ansicht, Fig. 11 in Draufsicht und Fig. 12 im Schnitt gemäß der Linie i—j der Fig. 10 in Seitenansicht von links.

Der in den Fig. 1 bis 5 dargestellte stabförmige, wendbare, aus Hartmetall bestehende Schneideinsatz 1 weist eine rhombische Querschnittsfläche auf, deren spitze Keilwinkel $\beta$ jeweils kleiner als 80° sind. In den beiden Endbereichen des Schneideinsatzes 1 sind je zwei ebene Nebenschneidenflächen 2 vorhanden, welche in Richtung der geometrischen Stabachse a—b gesehen, durch die kürzere Diagonale c—d der rhombischen Querschnittsflächen voneinander getrennt sind. Die gedachte Verbindungsgerade 4 der beiden der kürzeren Diagonale c—d gegenüberliegenden Endpunkte 3 des jeweiligen Endbereiches ist normal zur geometrischen Stabachse a—b. Von diesen Eckpunkten 3 weg sind die beiden Nebenschneidenflächen 2 in der durch diese Verbindungsgerade 4 und die geometrische Stabachse a—b bestimmten gedachten Ebene um gleich große Freiwinkel $\delta$ gegenüber der eben erwähnten Verbindungsgeraden 4 nach innen geneigt (siehe Fig. 4). Günstige Werte für diesen Freiwinkel $\delta$ liegen zwischen 2 und 6°. Diese beiden Nebenschneidenflächen 2 sind in der durch die kürzere Diagonale c—d und die geometrische Stabachse a—b bestimmten gedachten Ebene um gleich große Freiwinkel $\tau$ gegenüber einer zur Stabachse a—b normalen gedachten Ebene entgegengesetzt geneigt (siehe Fig. 5). Für den zuletzt erwähnten Freiwinkel $\tau$ erweisen sich Werte als günstig, die höchstens 32° sind. Der Schneideinsatz 1 ist bezüglich einer zur geometrischen Stabachse a—b normalen Ebene e—f spiegelsymmetrisch und er weist zwei einander gegenüberliegende, dem vorzugsweise konischen Kopf 11 einer Klemm- und Justierschraube 10 angepaßte, im Bereich der kürzeren Diagonale c—d in der Mitte der dort vorhandenen Längskanten 6' vorgesehene Ausnehmungen 5 auf.

Die Spannschraube 10 greift mit ihrem Kopf 11 jeweils in eine Ausnehmung 5 des Schneideinsatzes 1 ein und preßt diesen in eine V-förmige Nut 12 eines der in den Figuren 6 bis 12 dargestellten Werkzeughalters. Der größte Teil der durch den Schnittdruck hervorgerufenen Kippkräfte wird von den Seitenflächen der V-förmigen Nut 12 und nur ein kleiner Teil dieser Kippkräfte von der Spannschraube 10 aufgenommen. Zwischen dieser und dem Schneideinsatz 1 kann, wie in Fig. 8 dargestellt, eine Spanbrecherplatte 13 vorgesehen sein.

Die der V-förmigen Nut 12 abgewandte Längskante des Schneideinsatzes 1 bildet die Hauptschneide 6, die an dieselbe angrenzende, auf derselben Seite wie die Spannschraube 10 befindliche Seitenfläche die Spanfläche 7, die ebenfalls an die Hauptschneide 6 angrenzende zweite Seitenfläche die Freifläche 8.

**Patentansprüche**

1. Stabförmiger Schneideinsatz, z.B. aus Hartmetall oder Schnellstahl, mit einer annähernd rhombischen Querschnittsfläche, deren spitze Winkel vurzugsweise jeweils kleiner als 80° sind, in dessen Endbereichen je zwei ebene Nebenschneidenflächen (2) vorgesehen sind, welche in Richtung der geometrischen Stabachse (a—b) gesehen, durch die kürzere Diagonale (c—d) der rhombischen Querschnittsfläche voneinander getrennt sind, wobei die gedachte Verbindungsgerade (4) der beiden der kürzeren Diagonale (c—d) gegenüberliegenden Eckpunkte (3) des jeweiligen Endbereiches normal zur geometrischen Stabachse (a—b) ist und von diesen Eckpunkten (3) weg die beiden Nebenschneidenflächen (2) in der durch diese Verbindungsgerade (4) und die geometrische Stabachse (a—b) bestimmten gedachten Ebene um gleich große Freiwinkel ($\delta$) gegenüber dieser Verbindungsgeraden (4) nach innen geneigt sind, dadurch gekennzeichnet, daß die beiden Nebenschneidenflächen (2) in der durch die kürzere Diagonale (c—d) und die geometrische Stabachse (a—b) bestimmten gedachten Ebene um gleich große Freiwinkel gegenüber einer zur Stabachse (a—b) normalen gedachten Ebene entgegengesetzt geneigt sind.

2. Schneideinsatz nach Anspruch 1, dadurch gekennzeichnet, daß der Freiwinkel ($\delta$), um den die jeweilige Nebenschneidenfläche (2) in der durch die Verbindungsgerade (e—f) und die geometrische Stabachse (a—b) bestimmten gedachten Ebene geneigt ist, zwischen 2 und 6° beträgt.

3. Schneideinsatz nach Anspruch 1, dadurch gekennzeichnet, daß der Freiwinkel ($\tau$), um den die jeweilige Nebenschneidenfläche (2) in der durch die kürzere Diagonale (c—d) und die geometrische Stabachse (a—b) bestimmten gedachten Ebene geneigt ist, höchstens 32° beträgt.

4. Schneideinsatz nach einem der vorangegangenen Patentansprüche, gekennzeichnet durch zwei einander gegenüberliegende, dem vorzugsweise konischen Kopf (11) einer Klemm- und Justierschraube (10) angepaßte, im Bereich der kürzeren Diagonale (c—d) und in der Mitte der dort vorhandenen Längskanten (6') vorgesehene Ausnehmungen (5).

5. Schneideinsatz nach einem der vorangegangenen Patentansprüche, dadurch gekennzeichnet, daß der Schneideinsatz bezüglich einer zur geometrischen Stabachse (a—b) normalen Ebene (e—f) spiegelsymmetrisch ist.

6. Halter, z.B. eines Dreh- oder Fräswerkzeuges, der eine Spannschraube aufweist, für eine Schneidplatte nach einem der vorangegangenen Patentansprüche, dadurch gekennzeichnet, daß die Spannschraube (10) mit ihrem Kopf (11) jeweils in eine Ausnehmung (5) des Schneideinsatzes (1) eingreift und diesen in eine V-förmige Nut (12) des Halters preßt.

7. Halter nach Anspruch 6, dadurch gekennzeichnet, daß zwischen der Spannschraube (10) und dem Schneideinsatz (1) eine Spanbrecherplatte (13) vorgesehen ist.

8. Halter nach Anspruch 7, dadurch gekennzeichnet, daß die der V-förmigen Nut (12) abgewandte Längskante des Schneideinsatzes (1) die Hauptschneide (6), die an dieselbe angrenzende, auf derselben Seite wie die Spannschraube (10) befindliche Seitenfläche die Spanfläche (7) und die ebenfalls an die Hauptschneide (6) angrenzende zweite Seitenfläche die Freifläche (8) ist.

**Revendications**

1. Outil coupant rapporté en forme de barre, par exemple en métal dur ou en acier à coupe rapide, présentant une section transversale approximativement en forme de losange dont les angles aigus sont l'un et l'autre de préférence inférieurs à 80°, dans les parties terminales duquel il est prévu respectivement deux surfaces de coupe secondaires planes (2) qui, telles que considérées dans le sens de l'axe géométrique de la barre (a—b), sont séparées l'une de l'autre par la petite diagonale (c—d) de la surface rhombiforme de section transversale, la ligne droite imaginaire qui joint l'un à l'autre les deux sommets d'angle (3) de zone terminale opposés l'un à l'autre par rapport à la petite diagonale (c—d) étant dirigée perpendiculairement à l'axe géométrique de la barre (a—b), dans le plan imaginaire passant par cette ligne droite de jonction (4) et l'axe géométrique de la barre (a—b), les deux surfaces de coupe secondaires (2) étant, à partir desdits angles au sommet (3), inclinées vers l'intérieur par rapport à cette ligne droite de jonction (4) suivant les angles de dépouille ($\delta$) de même grandeur, caractérisé en ce que, dans le plan imaginaire passant par la petite diagonale (c—d) et l'axe géométrique de la barre (a—b), les deux surfaces de coupe secondaires (2) sont inclinées en sens inverse par rapport à un plan imaginaire perpendiculaire à l'axe de la barre (a—b) suivant des angles de dépouille de même grandeur.

2. Outil coupant rapporte selon la revendication 1, caractérisé en ce que l'angle de dépouille ($\delta$) suivant lequel la surface de coupe secondaire (2) est inclinée dans le plan imaginaire passant par la ligne droite de jonction (e—f) et l'axe géométrique de la barre (a—b) est compris entre 2° et 6°.

3. Outil coupant rapporté selon la revendication 1, caractérisé en ce que l'angle de dépouille ($\tau$) suivant lequel la surface de coupe secondaire (2) est inclinée dans le plan imaginaire passant par la petite diagonale (c—d) et l'axe géométrique de la barre (a—b) est au plus égal à 32°.

4. Outil coupant rapporté selon une quelconque des revendications précédentes, caractérisé par deux évidements (5) situés à l'opposé l'un de l'autre, adaptés à la tête (11) de préférence conique d'une vis de serrage et d'ajustage (10), prévus dans la zone de la petite diagonale (c—d) et au milieu des arêtes longitudinales (6') qui se trouvent à cet endroit.

5. Outil coupant rapporté selon une quelconque des revendications précédentes, caractérisé en ce que ledit outil coupant rapporté présente une forme symétrique par rapport à un plan (e—f) perpendiculaire à l'axe géométrique de la barre (a—b).

6. Porte-outil, par exemple pour un outil de tournage ou de fraisage, qui comporte une vis de serrage pour une plaquette tranchante selon une quelconque des revendications précédentes, caractérisé en ce que la vis de serrage (10) s'engage par sa tête (11) dans un des évidements (5) de l'outil coupant rapporté selon (1) et serre cet outil dans une rainure en V (12) du porte-outil.

7. Porte-outil selon la revendication 6, caractérisé en ce qu'il est prévu entre la vis de serrage (10) et l'outil coupant rapporté (1) plaquette brise-copeaux (13).

8. Porte-outil selon la revendication 7, caractérisé en ce que l'arête longitudinale de l'outil coupant rapporté (1) située à l'opposé de la rainure en V (12) forme le tranchant principal (6), la surface latérale qui lui est adjacente et est située du même côté que la vis de serrage (10) forme la surface d'attaque ou de dégagement (7) et la deuxième surface latérale également adjacente au tranchant principal (6) forme la dépouille (8).

## Claims

1. Rod-shaped bit, for example of hard metal or high-speed steel, with an approximately rhombic cross-sectional area, the acute angles of which are in each case preferably less than 80°, and in each end region of which bit two flat side cutting faces (2) are provided which, viewed in the direction of the geometric axis (a—b) of the rod, are separated from one another by the shorter diagonal (c—d) of the rhombic cross-sectional area, the imaginary straight connection line (4) of the two corner points (3) of the end region lying opposite the shorter diagonal (c—d) being normal to the geometric axis (a—b) of the rod, and from these corner points (3) the two side cutting faces (2) — in the imaginary plane defined by this straight connection line (4) and the geometric axis (a—b) of the rod — being inclined inwards at clearance angles ($\delta$) of the same size with respect to this straight connection line (4), characterized in that the two side cutting faces (2) in the imaginary plane defined by the shorter diagonal (c—d) and the geometric axis (a—b) of the rod are inclined towards each other at clearance angles of the same size with respect to an imaginary plane normal to the rod axis (a—b).

2. Bit according to claim 1, characterized in that the clearance angle ($\delta$) at which the side cutting face (2) in each case is inclined in the imaginary plane defined by the straight connection line (e—f) and the geometric axis (a—b) of the rod is between 2 and 6°.

3. Bit according to claim 1, characterized in that the side clearance angle ($\tau$) at which the side cutting face (2) in each case is inclined in the imaginary plane defined by the shorter diagonal (c—d) and the geometric axis (a—b) of the rod is at most 32°.

4. Bit according to one of the preceding claims, characterized by two recesses (5) which are opposite one another, are adapted to the preferably conical head (11) of a clamping and adjusting screw (10), and are provided in the region of the shorter diagonal (c—d) and in the centre of the longitudinal edges (6') present there.

5. Bit according to one of the preceding claims, characterized in that the bit is mirror symmetrical with respect to a plane (e—f) normal to the geometric axis (a—b) of the rod.

6. Holder, for example of a lathe or milling tool, comprising a clamping screw, for a bit according to one of the preceding claims, characterized in that the head (11) of the clamping screw (10) in each case engages in a recess (5) of the bit (1) and urges the latter into a V-shaped groove (12) of the holder.

7. Holder according to claim 6, characterized in that a chip breaker plate (13) is provided between the clamping screw (10) and the bit (1).

8. Holder according to claim 7, characterized in that the longitudinal edge of the bit (1) facing away from the V-shaped groove (12) is the main cutting edge (6), the lateral face bordering on this main cutting edge (6) and located on the same side as the clamping screw (10) is the rake face (7), and the second lateral face also bordering on the main cutting edge (6) is the flank (8).

FIG.1    0010081

FIG.2

FIG.3

FIG.4

FIG.5

FIG. 6

FIG. 8

FIG. 9

FIG. 7

FIG. 10

FIG. 12

FIG. 11